# EUROPEAN PATENT APPLICATION

(11) **EP 2 455 624 A1**
(43) Date of publication of application: **23.05.2012**
(21) Application number: 10822977.4
(22) Date of filing: 29.03.2010
(51) Int. Cl.: F16B 7/04

(54) **CONNECTING LOCKER**

(30) Priority: 16.10.2009 CN 200920235663 U; 16.10.2009 CN 200910036097
(71) Applicant: Changzhou Lingtong Exhibition Products Co. Ltd., Changzhou, Jiangsu 213161 (CN)
(72) Inventor: CHEN, Deming, Jiangsu 213161 (CN); LIU, Lianping, Jiangsu 213161 (CN)
(74) Representative: BRP Renaud & Partner
(86) International application number: PCT/CN2010/000395
(87) International publication number: WO 2011/044745

(57) **Abstract**

The invention provides a locking device for connection including a locking housing, a spring plate and an eccentric wheel. The locking housing is provided with at least an accommodating chamber for disposing the spring plate directly, so as to connect other supporting section bars or assembling parts in the assembling system. Two side blades are arranged at both sides of the locking housing, and the side blades and the locking housing are integrally formed. The locking device is inserted in the guide rails protruded inside the supporting section bar via the side blades. Each of the guide rails is provided with through holes for inserting fixing parts, and the fixing parts fix the locking device to the guide rails axially. The spring plate is provided with an assembling hole in adaption with the eccentric wheel, and the spring plate moves forwards and backwards by means of the rotation of the eccentric wheel arranged in the assembling hole. The locking housing is also provided with a boss for supporting the spring plate, and the eccentric wheel is directly mounted at a break in the rear part of the locking housing by the positioning of the assembling hole. Thus, the invention provides a locking device for connection which is easily manufactured, and may directly connect to supporting section bars or assembling parts in construction structures.

## Description

### FIELD OF THE INVENTION

The invention relates to a connecting device adapted to construction structures and especially to assembling systems used in commodity fairs or shops and, more particularly, to a locking device for connecting and supporting other supporting section bars or assembling parts in assembling systems.

### DESCRIPTION OF THE RELATED ART

A conventional three-clamp locking device includes a locking housing, a spring plate and an eccentric wheel. The locking housing is an integral construction with an inner cavity. A spring plate guiding boss is arranged at the front part, and the eccentric wheel and a spring plate boss is arranged at the rear part. An assembling hole in adaption to the eccentric wheel is arranged at the spring plate, and the spring plate moves forwards and backwards by means of rotation of the eccentric wheel disposed in the assembling hole. However, as the three-clamp locking device is adapted to construction structures and especially to assembling systems used in commodity fairs or shops, it cannot directly connect other supporting section bars unless an adapter is used. Chinese patent ZL99111845.6 discloses the connecting way above, in which the locking device and the adapter must be finely manufactured and matched. This makes the manufacturing process complicated and the assembling process troublesome. Moreover, the connection between the locking device and the adapter is realized by using the eccentric wheel, the locking device and the adapter should be in adaption to each other, and higher requirements are put forward in regard to the designing and manufacturing of the locking device. The eccentric wheel should be pressable. It is pressed down and located in the locking housing during the assembling process and springs out after the assembling process is finished. As a result, this leads to a more complicated manufacturing process of the spring plate, the eccentric wheel and the locking housing. Besides, machining a hole on the locking housing may lower the strength of the locking housing, and due to the limitation of the size and self-locking angle, the conventional locking device is easy be self-locked, so that the eccentric wheel cannot be pushed downwards, which negatively impacts the mounting and demounting of the locking device.

### BRIEF SUMMARY OF T HE INVENTION

To solve the problems above, one object of the invention is to provide a locking device for connection which is not only easy to manufacture, but also may directly connect supporting section bars or assembling parts in a construction structure.

The invention provides a locking device for connection adapted to constructing supporting and connecting structures in commodity fairs or shops. The locking device for connection includes a locking housing, a spring plate and an eccentric wheel. The locking housing is provided with at least an accommodating chamber for disposing the spring plate directly, so as to connect other supporting section bars or assembling parts in the assembling system. Two side blades are arranged at both sides of the locking housing, and the side blades and the locking housing are integrally formed. The locking device is inserted in the guide rails protruded inside the supporting section bar via the side blades. Each of the guide rails is provided with through holes for inserting fixing parts, and the fixing parts fix the locking device to the guide rails axially. The spring plate are provided with an assembling hole in adaption with the eccentric wheel, and the spring plate moves forwards and backwards by means of the rotation of the eccentric wheel arranged in the assembling hole. The locking housing is also provided with a boss for supporting the spring plate, and the eccentric wheel is directly mounted at a break in the rear part of the locking housing by the positioning of the assembling hole.

Compared with the conventional locking device, the locking device in the invention does not need an adapter to be assembled to the locking device, and it combines the functions of the adapter and the locking device to allow the locking device to be directly inserted in the guide rails protruded inside the supporting section bar, and then the locking device is fixed in the inside end of the supporting section bar. Besides, supporting section bars can be connected to each other via the spring plate. Furthermore, since the locking device is also used as the adapter, it is unnecessary to manufacture the eccentric wheel to be pressable, and it is also unnecessary to consider the structures of the spring plate and the boss. As a result, the designing is simplified, machining a hole on the locking housing is avoided, and the strength of the locking device is improved. Manufactures does not need to consider the height adaption of the locking device and the adapter. This thus simplifies the manufacturing process, reduces the cost and makes the assembling more convenient and fast.

In a preferred embodiment of the invention, each of the side blades is provided with at least two reinforce ribs to ensure the supporting strength of the locking device.

In a preferred embodiment of the invention, each of the side blades of the locking device is provided with screw holes for screws used as fixing parts. The screw holes are disposed corresponding to the reinforce ribs, and the locking device is firmly fixed to the guide rails of the supporting section bar via the screws.

In the invention, the locking device is plate-shaped, and two tracks are formed at both side blades of the locking device to correspond to the guide rails. Thus, precise alignment is realized through the adaption. The tracks and the guide rails are inserted in each other to locate accurately and make the mounting process quickly.

In a preferred embodiment of the invention, a convex lug is disposed at the front part of the locking housing of the locking device. When the locking device butts other section bars, the convex lug is first inserted in the rabbet of the section bar for location, and then the locking process is performed, which is convenient and fast.

In a preferred embodiment of the invention, a conical transitional cambered surface is located on the eccentric wheel for guiding an operating tool, and it guides the operating tool and the rabbet on the eccentric wheel to locate relative to each other quickly.

### BRIEF DESCRIPTION OF THE DRAWINGS

Hereinafter, the embodiments of the present invention will be described in detail with reference to the accompanying drawings, in which:
FIG. 1 is an exploded diagram showing a locking device and a supporting section bar in an embodiment of the invention;
FIG. 2 is a schematic diagram showing the assembled locking device and the supporting section bar in an embodiment of the invention;
FIG. 3 is a perspective diagram showing the locking device and the butted supporting section bars;
FIG. 4 is a sectional diagram taken along line A-A in FIG. 3;
FIG. 5 is a front view diagram showing the locking device in an embodiment of the invention;
FIG. 6 is a side view diagram of FIG. 5;
FIG. 7 is a top view diagram of FIG. 5;
FIG. 8 is a schematic diagram showing the structure of the eccentric wheel in an embodiment of the invention; and
FIG. 9 is an exploded diagram showing another structure of the locking device in an embodiment of the invention.

### DETAILED DESCRIPTION OF THE EMBODIMENTS

The embodiments of the invention will be described in detail hereinafter. However, the embodiments are just examples, rather than intended to limit the scope of the invention.

### Embodiment 1:

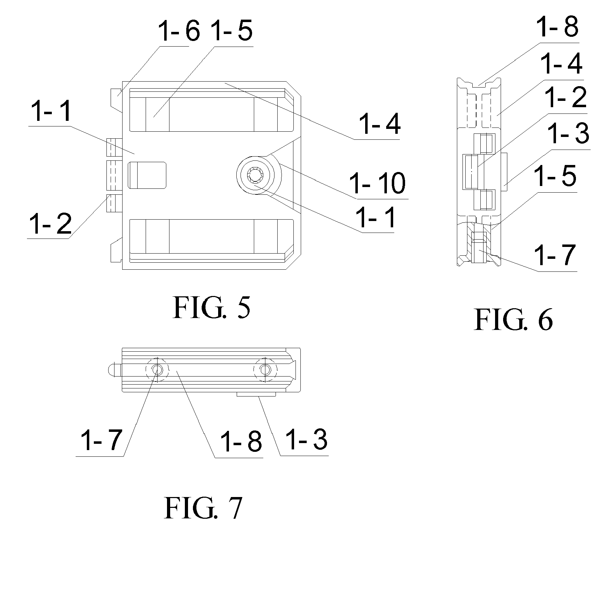

As shown in FIG. 5 to FIG. 7, an embodiment of the invention provides a locking device including a locking housing 1-1, a three-clamp spring plate 1-2 and an eccentric wheel 1-3. The locking housing is provided with an accommodating chamber which is used to accommodate the three-clamp spring plate 1-2 directly. The rear part of the locking housing is provided with a break 1-10 and a boss 1-9 for supporting the three-clamp spring plate 1-2. The three-clamp spring plate 1-2 is provided with an assembling hole in adaption to the eccentric wheel 1-3, and the eccentric wheel 1-3 is disposed at the break 1-10 at the rear part of the locking housing 1-1 via the location of the assembling hole. The three-clamp spring plate 1-2 moves forward and backward by means of the rotation of the eccentric wheel 1-3 arranged in the assembling hole, and two sides of the locking housing 1-1 extend respectively to form two side blades 1-4. Two supporting pillars are formed at transverse surfaces of the two side blades as reinforce ribs. The sides of the side blades are provided with tracks 1-8 corresponding the guide rails 2-1 inside the supporting section bar, and screw holes 1-7 are machined corresponding to the reinforce ribs. The front part of the side blade 1-4 is provided with two convex lugs 1-6.

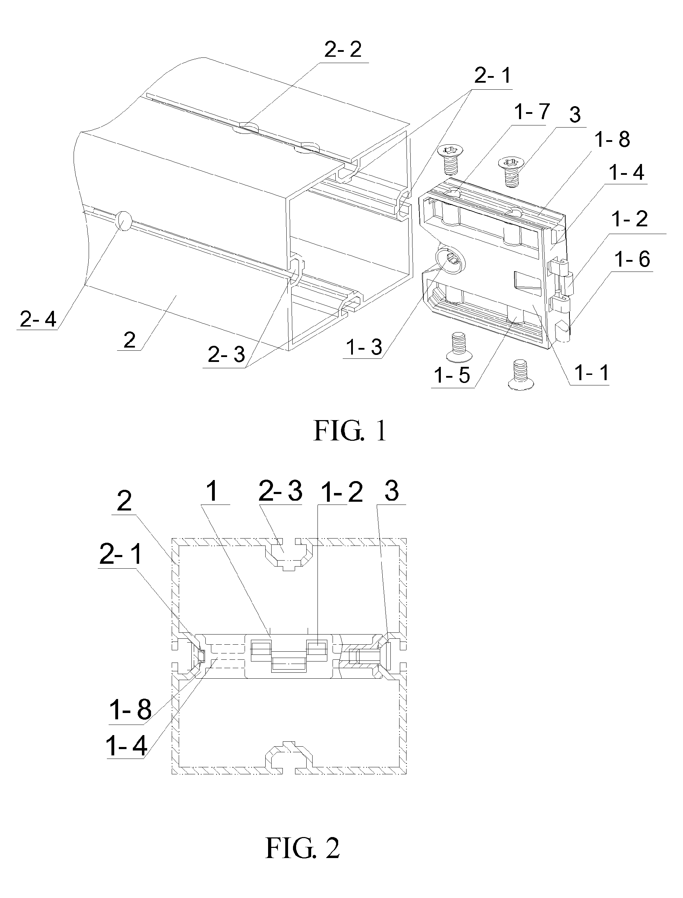

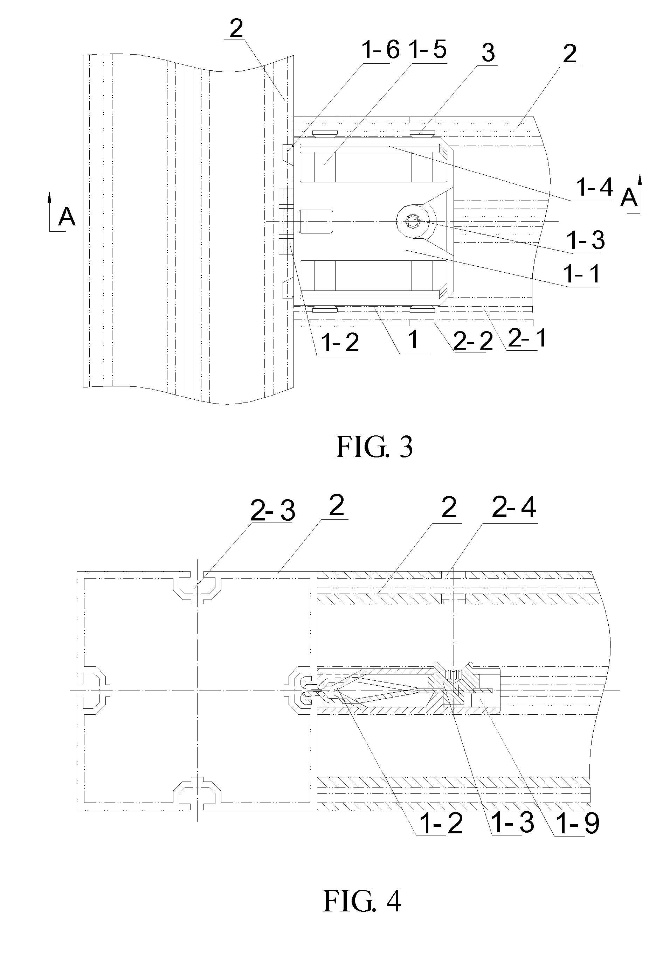

As shown in FIG. 1 to FIG. 3, the supporting section bar is an aluminum section with a special profile. The cross section is square, and each surface of the section bar is provided with a longitudinal rabbet 2-3 cut backwardly. Protruded guide rails 2-1 are formed in the inner part of the supporting section bar, and two through holes 2-2 are machined at the guide rails 2-1. Operating holes 2-4 are arranged on the surface of the section bar for the operating tool to enter and operate the eccentric wheel. The locking device 1 is inserted in the guiding rails 2-1 protruded inside the supporting section bar 2 via the side blades 1-4, and two screws passes through the through hole 2-2 and are connected to the screw hole of the locking device to fix the locking device 1 to the guide rails 2-1 axially.

In the practical usage, the locking device 1 is first fixed to a supporting section bar, and then the locking device 1 is inserted in another supporting section bar that needs to be connected via the convex lug 1-6. The operating tool passes through the operating hole 2-4, rotates the eccentric wheel 1-3 of the locking device 1 and makes the clamps of the three-clamp spring plate 1-2 stagger with each other to lock the inside surface of the rabbet of the other supporting section bar and to fix the two section bars tightly.

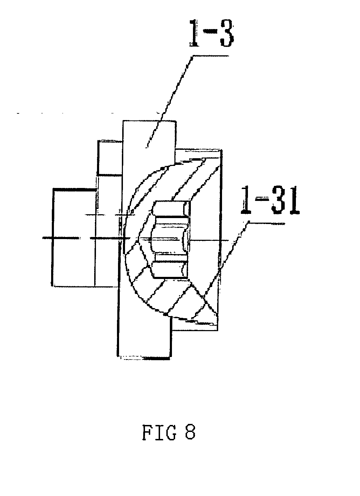

As shown in FIG. 8, the outer end of the cross-shaped rabbet of the eccentric wheel 1-3 is provided with a conical transitional cambered surface (1-31) to lead the operating tool to butt the rabbet of the eccentric wheel.

### Embodiment 2:

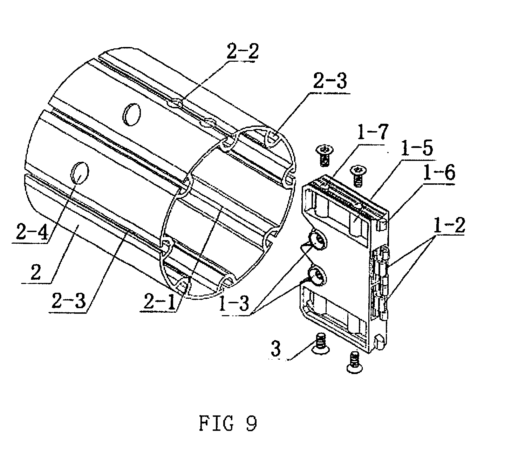

As shown in FIG. 9, based on the embodiment 1, the locking housing in the present embodiment is provided with two accommodating chambers to form a dual-locking structure. Furthermore, the supporting section bar in the embodiment is special profile with a round section.

Although the invention has been described as above in reference to several typical embodiments, it is to be understood that the terms used therein are just illustrative and exemplary rather than restrictive. Since the invention can be applied in various forms without departing from the spirit or principle of the invention, it is to be understood that the abovementioned embodiments will not be limited to any specific details mentioned above, rather, they should be construed broadly in the spirit or concept of the invention defined by the appended claims. Therefore, the present invention aims to cover all the modifications or variations falling within the protection scope defined by the appended claims.

## Claims

1. A locking device for connection, adapted to constructing a supporting connection used in an assembling system such as commodity fairs or shops, the locking device for connection comprising a locking housing (1-1), a spring plate (1-2) and an eccentric wheel (1-3), wherein at least an accommodating chamber for mounting the spring plate (1-2) is disposed in the locking housing (1-1), thereby connecting other supporting section bars or assembling parts in the assembling system; two side blades (1-4) are disposed at both sides of the locking housing (1-1), and the side blades (1-4) and the locking housing (1-1) are integrally formed, the locking device (1) is inserted in guide rails (2-1) protruded inside the supporting section bar (2) via the side blades (1-4), and the guide rails (2-1) are provided with through holes (2-2) for inserting fixing parts, the fixing parts fix the locking device (1) to the guiding rails (2-1) axially, the spring plate (1-2) is provided with an assembling hole in adaption with the eccentric wheel, and the spring plate (1-2) moves forwards and backwards by means of the rotation of the eccentric wheel (1-3) arranged in the assembling hole, the locking housing (1-1) is also provided with a boss (1-9) for supporting the spring plate (1-9), and the eccentric wheel (1-3) is directly mounted at a break (1-10) in the rear part of the locking housing (1-1) by the positioning of the assembling hole (1-10).

2. The locking device for connection according to claim 1, wherein at least two reinforce ribs (1-5) are disposed at the side blades (1-4).

3. The locking device for connection according to claim 2, wherein screw holes (1-7) are disposed at the side blades (1-4) of the locking device, and the screw holes (1-7) are used to connect screws (3) which is used as fixing parts, and the screw holes (1-7) and the reinforce ribs (1-5) are arranged corresponding to each other.

4. The locking device for connection according to claim 1, wherein the locking device (1) is plate-shaped, and tracks (1-8) are formed at the two side blades (1-4) of the locking device to correspond to the guide rails (2-1).

5. The locking device for connection according to claim 1, wherein a convex lug (1-6) is arranged at the front part of the locking device (1) to butt a rabbet of another supporting section bar (2-3).

6. The locking device for connection according to claim 1, wherein a conical transitional cambered surface (1-31) is located on the eccentric wheel (1-3) for guiding an operating tool to enter the eccentric wheel (1-3).
